(19) Europäisches Patentamt
European Patent Office
Office européen des brevets

(11) **EP 4 749 244 A1**

(12) **EUROPEAN PATENT APPLICATION**

(43) Date of publication:
**27.05.2026 Bulletin 2026/22**

(21) Application number: **25216145.0**

(22) Date of filing: **17.11.2025**

(51) International Patent Classification (IPC):
**G01C 21/20** (2006.01)  **G08G 3/00** (2006.01)

(52) Cooperative Patent Classification (CPC):
**G01C 21/203; G08G 3/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.11.2024 KR 20240170027**

(71) Applicant: **Korea Institute of Ocean Science and Technology**
**Busan 49111 (KR)**

(72) Inventors:
• **LEE, Won Hee**
  **34103 DAEJEON (KR)**
• **CHO, Deuk Jae**
  **34103 DAEJEON (KR)**

(74) Representative: **EP&C**
**P.O. Box 3241**
**2280 GE Rijswijk (NL)**

(54) **SYSTEM AND METHOD FOR FORECASTING TRAJECTORY BASED ON AIS DATA AND TIDE OBSERVATION STATION INFORMATION**

(57)  The present invention relates to a device and method for improving the accuracy of trajectory forecasting of an Automatic Identification System (AIS). According to the present invention, a system and method for predicting trajectory using AIS data and tidal observatory information are provided, which are configured to improve the accuracy of prediction even in areas with severe tidal changes by integrating sea level information into AIS data through the nearest tidal gauge and making predictions through feature augmentation.

【Figure 18】

Collects various predefined data including AIS data and tide gauge station information — S10

Based on the collected data, predicts the vessel's trajectory using a deep learning model according to predefined settings — S20

Outputs various information including the predicted vessel trajectory, according to predefined settings or user requests — S30

**Description**

**CROSS-REFERENCE TO RELATED APPLICATIONS**

This application claims priority to Korean Patent Application No. 10-2024-0170027 filed on Nov. 25, 2024, the entire contents of which are herein incorporated by reference.

**TECHNICAL FIELD**

The present invention relates to a device and method for improving the trajectory forecasting accuracy of an Automatic Identification System (AIS), and more particularly, to a system and method for predicting trajectory using AIS data and tide gauge station information, which are configured to perform trajectory prediction using AIS data and sea level information observed through a tide gauge station, thereby improving the accuracy of prediction even in areas with severe tidal changes, in order to solve the problems of conventional AIS prediction models in which time series prediction is performed using features such as latitude, longitude, speed over ground (SOG), and course over ground (COG), and the influence of tidal fluctuations is not considered in most cases, and thus the accuracy of prediction is reduced in areas with severe tidal changes.

In addition, the present invention relates to a trajectory prediction system and method using AIS data and tide gauge information, which are configured to perform feature augmentation by integrating the Haversine distance to the nearest tide gauge and real-time sea level information from the tide gauge into AIS data to perform trajectory prediction based on the data on which feature augmentation has been performed, thereby increasing the trajectory prediction accuracy of AIS even in areas with severe tidal changes with a relatively simple configuration and low cost, in order to solve the problem of the prior art AIS prediction models that had limitations in that the accuracy of prediction was low in areas with severe tidal changes because the influence of tidal changes was not taken into account as described above.

**BACKGROUND**

Recently, sea level rise is accelerating due to environmental factors such as global warming, making it increasingly difficult to accurately predict the paths of ships navigating the sea, especially near coastlines.

Consequently, various devices and methods have been proposed to predict the movement paths or trajectory of ships, as disclosed in Korean Patent Publication No. 10-2024-0126909, "Maritime Traffic Condition Prediction System and Method Using KalmanNet," and Korean Patent Publication No. 10-2023-0137720, "Path Generation Device and Method for Safe Navigation of Autonomous Ships." However, these prior art technologies suffer from the following limitations.

More specifically, existing prediction models for vessel movement generally rely on AIS data to predict future movements, focusing on vessel trajectories, speeds, and directions. However, these models do not account for real-time environmental conditions such as tidal fluctuations, resulting in limited accuracy, especially in areas with significant tidal fluctuations.

Therefore, to improve the accuracy of vessel path prediction models in coastal areas where tidal fluctuations are prominent, it is crucial to integrate real-time sea level data with AIS data and incorporate it into predictions. This is especially important in marine environments such as those around the Korean Peninsula, where both long-term sea level trends and short-term tidal effects create volatile conditions.

However, it is often difficult for ships to directly access real-time sea level measurement information. For example, while the International Hydrographic Organization (IHO) provides navigational data such as S-104 water level information, accessibility and availability of this data are limited.

Furthermore, most of the data provided is not high-resolution sea level information for the precise location of the vessel, but rather gridded sea level data, with only low-resolution information provided for each grid.

Therefore, to address the limitations of existing AIS-based trajectory prediction systems and methods, a new trajectory prediction system and method utilizing AIS data and tide gauge information would be desirable. This system would integrate sea level information into AIS data to enhance prediction accuracy even in areas with significant tidal fluctuations. However, no device or method has yet been developed that fully meets these requirements.

[Prior Art Documents]

Korean Patent Publication No. 10-2024-0126909 (2024.08.22.)

Korean Patent Publication No. 10-2023-0137720 (2023.10.05.)

**SUMMARY**

The present invention is intended to solve the problems of the prior art as described above, and therefore, the purpose of the present invention is to propose a trajectory prediction system and method using AIS data and tide gauge station information, which are configured to perform trajectory prediction using sea level information observed through AIS data and tide gauge stations, thereby increasing the accuracy of prediction even in areas with severe tidal changes, in order to solve the problems of the prior art AIS prediction models, which generally perform time series prediction using features such as latitude, longitude, speed over ground (SOG) and course over ground (COG), and in which the influence of tidal fluctuations is not considered in most cases, and therefore, the accuracy of prediction is reduced in areas with severe tidal changes.

In addition, another object of the present invention is to solve the problem of the prior art AIS prediction models that had limitations in that the accuracy of prediction was low in areas with severe tidal changes because the influence of tidal changes was not taken into account as described above, and thus the Haversine distance to the nearest tide gauge and real-time sea level information from the tide gauge were integrated into AIS data to perform feature augmentation, and trajectory prediction was performed based on the data on which feature augmentation was performed, thereby presenting a trajectory prediction system and method using AIS data and tide gauge observation station information that are configured to increase the accuracy of AIS trajectory prediction even in areas with severe tidal changes with a relatively simple configuration and low cost.

In order to achieve the above-described object, according to the present invention, a trajectory prediction system using Automatic Identification System (AIS) data and tide gauge station information is provided, characterized in that it comprises a data collection unit configured to collect various predetermined data for trajectory prediction, including AIS data and tide gauge station information; a ship trajectory prediction unit configured to predict a ship's trajectory based on the data collected through the data collection unit according to predetermined settings; and an output unit configured to output various data obtained as a result of the processing of the data collection unit and the vessel trajectory prediction unit according to predetermined settings.

Here, the trajectory prediction system is characterized in that it further comprises a communication unit configured to transmit and receive various data through at least one of wired and wireless communication between various equipment, including AIS and tide gauges installed on a vessel, and user terminals including personal portable information and communication terminals such as smartphones or tablet PCs, or information processing devices such as PCs or laptops, and external devices including servers; a database unit configured to store the overall processing process of the trajectory prediction system and various data obtained as a result of the processing, thereby establishing a trajectory prediction-related database for each vessel; and a control unit configured to control the overall operation of the trajectory prediction system.

In addition, the trajectory prediction system is characterized in that the data collection unit is configured to: receive various data including the latitude, longitude, speed over ground (SOG), and course over ground (COG) of the vessel, the latitude and longitude of the nearest tide gauge station(tide gauge) from the current position, the distance from the current position to the tide gauge station, and sea level information at the current point in time from the AIS installed on the vessel and tide gauge station, or perform processing to directly receive each of said information through a separate input means.

In addition, the trajectory prediction system is characterized in that the vessel trajectory prediction unit is configured to: using a deep learning model pre-trained to predict future trajectories from past trajectory data, by reflecting sea level information and the Haversine distance (d) to the nearest tide gauge to the vessel's current position predict the vessel trajectory using the following mathematical equation,

$$d = 2R \cdot \arcsin(\sqrt{a})$$

$$\sin^2(\frac{\triangle\phi}{2}) + \cos(\phi_1) \cdot \cos(\phi_2) \cdot \sin^2(\frac{\triangle\lambda}{2})$$

(Here, R represents the Earth's radius (R = 6371 km), $\phi1$ and $\phi2$ represent the latitudes of the vessel and the tide gauge, respectively, and $\triangle\phi$ and $\triangle\phi$ represent the latitude and longitude differences between the vessel and the tide gauge, respectively).

In addition, the trajectory prediction system is characterized in that the output unit is configured to: output the overall processing process of the trajectory prediction system and various data obtained as a result of the processing in a specific form or format according to predetermined settings or user selection.

In addition, the trajectory prediction system is characterized in that the control unit is configured to: control the overall operation of the trajectory prediction system and, based on data stored in the database, to provide customized information according to a user's request.

And according to the present invention, a trajectory prediction method using the trajectory prediction system using AIS data and tide gauge station information as described above is provided, characterized in that it comprises; a data collection step in which various predetermined data for trajectory prediction, including AIS data and tide gauge station information, are collected through the data collection unit of the trajectory prediction system; a vessel trajectory prediction step in which a vessel trajectory is predicted according to predetermined settings based on the data collected through the data collection step, through the vessel trajectory prediction unit of the trajectory prediction system; and an output step in which various data obtained as a result of the data collection step and the vessel trajectory prediction step are output according to predetermined settings through the output unit of the trajectory prediction system.

## BRIEF DESCRIPTION OF THE DRAWINGS

Figure 1 is a diagram that summarizes information contained in points within a track in a table.

Figure 2 is a diagram schematically illustrating the locations of tide gauge stations located along the coastline of Korea.

Figure 3 is a diagram illustrating examples of sea level change information measured at the tide gauge stations shown in Figure 2.

Figure 4 is a diagram schematically illustrating examples of track prediction results combining the tide gauge station information shown in Figure 3 with AIS information.

Figure 5 is a conceptual diagram schematically illustrating the overall flow of a trajectory prediction performance test performed in an embodiment of the present invention.

Figure 6 is a diagram showing a table summarizing hyperparameter settings applied to an embodiment of the present invention.

Figure 7 is a diagram showing a detailed configuration of a test system applied to an embodiment of the present invention.

Figure 8 is a diagram showing trajectory prediction results for each model in the range of 0 to 100 cm.

Figure 9 is a diagram showing trajectory prediction results for each model in the range of 100 to 200 cm.

Figure 10 is a diagram showing trajectory prediction results for each model in the range of 200 to 300 cm.

Figure 11 is a diagram showing trajectory prediction results for each model in the range of 300 to 400 cm.

Figure 12 is a diagram showing trajectory prediction results for each model in the range of 400 to 500 cm.

Figure 13 is a diagram showing trajectory prediction results for each model in the range of 500 to 600 cm. Figure 14 is a diagram showing trajectory prediction results for each model in the 600 to 700 cm range.

Figure 15 is a diagram showing trajectory prediction results for each model in the 700 to 800 cm range.

Figure 16 is a diagram showing trajectory prediction results for each model in the 800 to 900 cm range.

Figure 17 is a block diagram schematically illustrating the overall configuration of a trajectory prediction system using AIS data and tide observation station information according to an embodiment of the present invention.

Figure 18 is a flowchart schematically illustrating the overall configuration of a trajectory prediction method using AIS data and tide observation station information according to an embodiment of the present invention.

## DETAILED DESCRIPTION OF THE PREFERRED EMBODIMENTS

Hereinafter, with reference to the accompanying drawings, a detailed embodiment of a vibration monitoring system and method using metal surface wave communication according to the present invention will be described.

It should be noted that the following description is merely one exemplary embodiment for implementing the present invention, and the present invention is not limited to the embodiments described below.

Also, in the following description of the embodiments of the present invention, detailed explanations of portions that are the same as or similar to the prior art, or those that would be easily understood and carried out by those skilled in the art, have been omitted to simplify the description.

Continuing, with reference to the drawings, the specific details of the trajectory prediction system and method using AIS data and tidal station information according to the present invention will be described.

As described above, integrating real-time sea level data into the prediction model is essential to improving the accuracy of vessel route prediction in coastal areas. This is particularly important in areas with significant tidal fluctuations. However, the lack of high-resolution data makes it difficult to directly obtain real-time sea level measurement data at precise vessel locations.

Accordingly, the present invention proposes a trajectory prediction system and method using AIS data and tide gauge station information, which are configured to improve the accuracy of vessel route prediction in coastal areas, especially in areas where tidal changes are prominent, by obtaining real-time sea level data from the nearest tide gauge station and predicting the route by considering the Haversine distance to the station and the tidal information and AIS information within the station.

More specifically, in general, a ship trajectory ($T_{traj}$) is composed of a sequence of 120 time-stamped points, as shown in the following [Mathematical Formula 1], and has a fixed length that includes past and future ship movements at 10-minute intervals. Each of these 120 point trajectories is divided into 5-hour past data (60 points) and 5-hour future prediction data (60 points), and existing methods are configured to learn past data through an AI model to predict future data.

$$[\text{Equation 1}]$$

$$T_{traj} = \{P_1, P_2, ..., P_{120}\}$$

Here, in the above-mentioned [Equation 1], each point Pi represents a point within the track, and includes information on the latitude (LA), longitude (LO), the ship's geographic coordinates at each point in time, the ship's speed relative to the ground (SOG), and the ship's actual moving direction (COG).

Furthermore, to reflect the ship's dynamic characteristics, the equation also includes information on the latitude difference ($\triangle$LA) and longitude difference ($\triangle$LO) between consecutive points, as well as environmental variables such as the distance to a tide station (Distance) and the tide level (Tide) at that point in time.

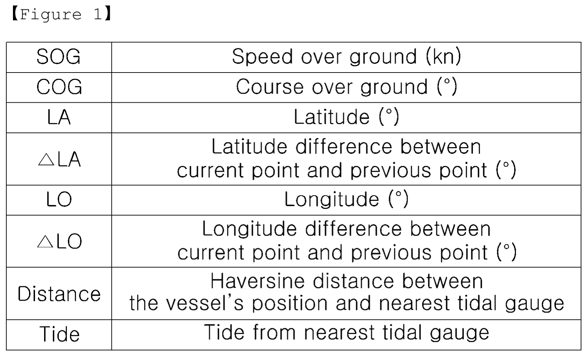

That is, referring to Fig. 1, Fig. 1 is a diagram that organizes information included in points within a track into a table, and therefore, a model learned including these features can more accurately predict the expected ship path than an existing model that does not consider environmental factors.

Furthermore, to understand how sea level fluctuations can affect vessel movements, it is particularly important to reflect the water level at the vessel's location using tide data collected from the nearest tide gauge. At this time, distance information, representing the Haversine distance between the vessel's position and the nearest tide gauge, can be used to measure the vessel's distance from the location where the tide data was collected, providing spatial context to the sea level data. Incorporating this feature into the prediction model allows for more accurate predictions by considering environmental factors that affect vessel trajectories.

Furthermore, the Haversine distance (d) between the vessel's position and the tide gauge can be calculated using the following Equations 2 and 3. The Tide data is derived from the tide data collected from the nearest tide gauge, and the Distance data is derived from the distance between the vessel's position and the nearest tide gauge.

$$[\text{Equation 2}]$$

$$a = \sin^2\left(\frac{\triangle\phi}{2}\right) + \cos(\phi_1) \cdot \cos(\phi_2) \cdot \sin^2\left(\frac{\triangle\lambda}{2}\right)$$

Here, $\varphi1$ and $\varphi2$ represent the latitude of the ship and the tide observation station, respectively, and $\triangle\varphi$ and $\triangle\lambda$ represent the latitude difference and longitude difference between the ship and the tide observation station, respectively.

[Equation 3]

$$d = 2R \cdot \arcsin(\sqrt{a})$$

Here, R represents the Earth's radius (R = 6371 km).

Furthermore, the ship trajectory dataset can be defined as in [Equation 4] below.

[Equation 4]

$$TD = \{Traj_1, ..., Traj_j, ..., Traj_n\}$$

Where, j = 1, ..., n represents the number of trajectories.

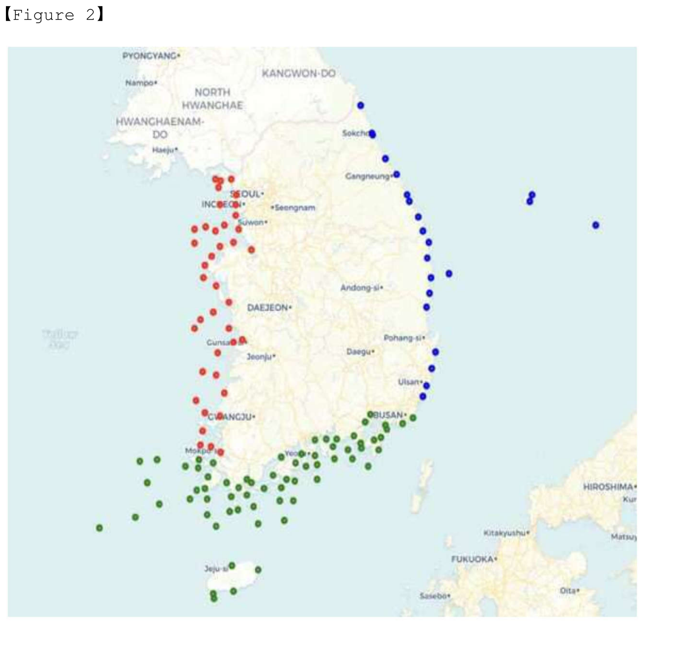

Continuing with Figure 2, this diagram schematically illustrates the locations of tidal observation stations along the coastline of South Korea.

In Figure 2, red represents the West Sea, green represents the South Sea, and blue represents the East Sea.

As shown in Figure 2, the geographical complexity of the Korean Peninsula, surrounded by three seas with different tidal ranges, presents unique challenges in accurately predicting vessel trajectories. Therefore, the present invention proposes a route prediction system and method that combines tidal observation station information with AIS information, as described above.

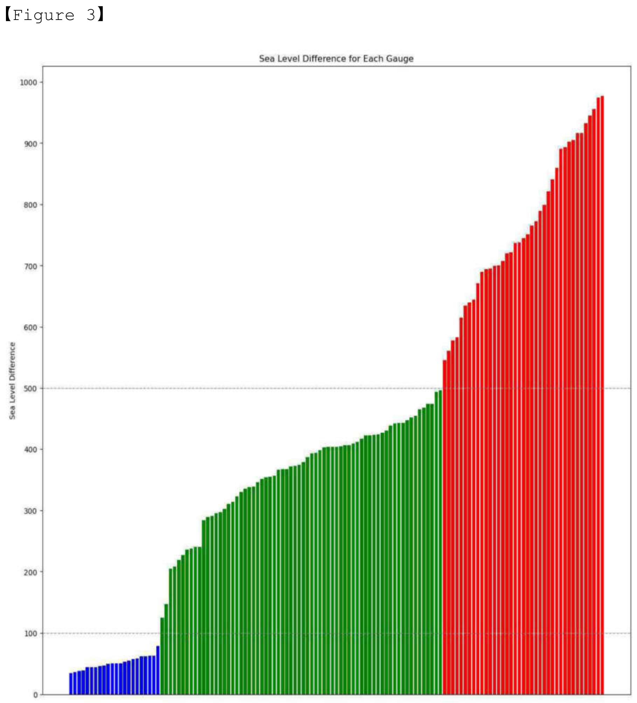

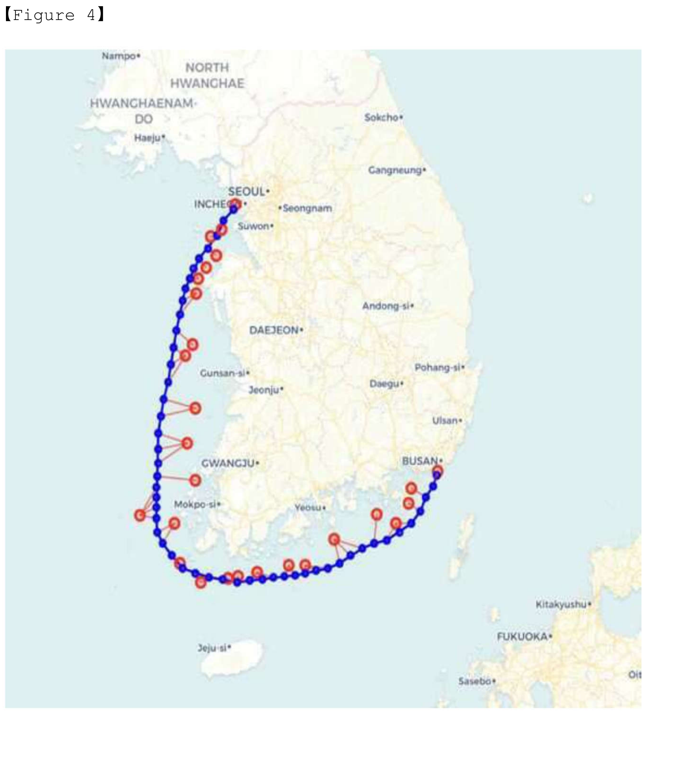

That is, referring to FIGS. 3 and 4, FIG. 3 is a diagram showing an example of sea level variation information measured at the tide gauge station shown in FIG. 2, and FIG. 4 is a diagram schematically showing an example of a track prediction result combining the tide gauge station information shown in FIG. 3 and AIS information, and the points indicated in FIG. 4 directly reflect the data shown in FIG. 3, where the sea level variation of each tide gauge is indicated.

More specifically, as shown in Figures 3 and 4, the East Sea exhibits relatively stable sea level fluctuations within 100 cm, the South Sea exhibits greater fluctuations in the 100-500 cm range, and the West Sea exhibits greater fluctuations in the 500-900 cm range. Three distinct regions, defined by sea level differences, were segmented using one-dimensional clustering analysis. Significant changes in sea level behavior were identified, particularly around the 100 and 500 cm thresholds, which were used as segmentation boundaries in Figure 3.

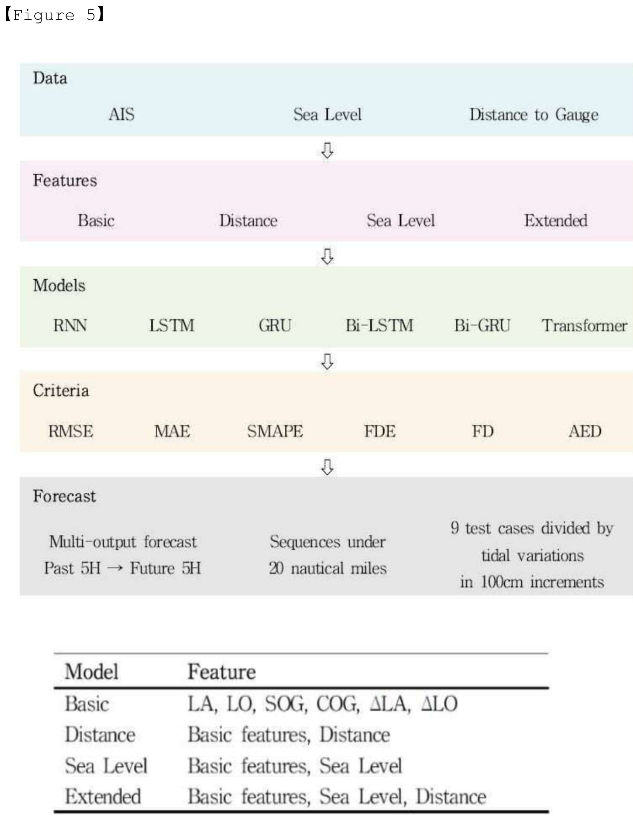

Furthermore, among these regions, the South Sea presents the most complex challenges due to strong currents, numerous islands, and significant tidal variations. As vessels approach coastal areas, especially ports, traffic density increases, further complicating trajectory prediction. Accordingly, in the present invention, route prediction was performed using six time-series deep learning models: RNN, LSTM, GRU, Bi-LSTM, Bi-GRU, and Transformer. The dataset consisted of AIS data collected over six months in the waters around the Korean Peninsula and sea level data collected from tide gauges located in various coastal areas across the country. The performance of each model was evaluated through test data using six different indicators. That is, referring to Figure 5, Figure 5 is a conceptual diagram schematically illustrating the overall flow of route prediction performance testing performed in an embodiment of the present invention.

First, the dataset used for the test is largely composed of two parts. First, the Automatic Identification System (AIS) data containing AIS records of cargo ships for six months from June 1, 2022 to November 30, 2022, where the defined region of interest (ROI) is a rectangular area bounded by latitude coordinates (31.0°N to 39.0°N) and longitude coordinates (124.0°E to 132.0°E). Before preprocessing, the dataset consisted of 9,546 unique vessel identifiers, and AIS messages were aggregated by vessel ID to form continuous trajectories. Trajectories with data gaps exceeding 1 hour were split into separate trajectories to account for anchoring or data loss cases, and the average trajectory duration was 454.2 minutes. The dataset initially contained 216,517 trajectories.

Additionally, sea level data affected by tides were provided by the public Smart Tidal Forecasting system provided by the Korea Hydrographic and Oceanographic Agency. Data collected from June 1, 2022, to November 30, 2022, closely matches AIS track data and captures sea level measurements at one-minute intervals from tide gauges nationwide.

That is, Figure 3 shows the results of classifying the tide gauges into three categories according to sea level change. During the study period, a total of 129 tide gauges were used, 22 tide gauges had a sea level change of less than 100 cm (blue), 68 tide gauges had a change of 500 cm or less (green), and 39 tide gauges had a change of more than 500 cm (red). This classification naturally reflects the geographical differences between the East Sea, the South Sea, and the West Sea, and corresponds to the various tidal conditions observed in each region.

Additionally, AIS data went through several preprocessing steps to ensure data quality and consistency for training. Namely, since AIS data is collected from various vessels at irregular time intervals, the data was first resampled to a uniform 1-minute interval. This resampling process standardizes the data and ensures consistency across all trajectories, which is a crucial step for accurate time series forecasting.

In addition, several filtering criteria were applied to further refine the dataset. Trajectories of vessels with a gross tonnage of less than 30 tons were removed as they do not represent typical cargo ship movements and may introduce noise into the predictions. Trajectories with a ground speed (SOG) of less than 3 knots or more than 30 knots were excluded to remove unrealistic vessel speeds that may indicate sensor errors or anomalies.

Additionally, the Haversine formula was used to calculate the total distance traveled between the first and last points for each trajectory, and trajectories less than 35 nautical miles were excluded as these movements likely represent stationary vessels or vessels performing local maneuvers such as docking or turning. To maintain consistency in the trajectory length used in training, trajectories less than 600 minutes were excluded, and for trajectories longer than 600 minutes, a sliding window approach was applied, and trajectories were segmented into 600-minute segments with a 60-minute step size to minimize data loss and capture multiple subsections of longer journeys.

Additionally, after initial filtering, the data was downsampled to 10-minute intervals to balance model performance and computational efficiency, and the new resampling interval reduced the dataset size for smoother training while maintaining essential temporal trends. To capture the movement directionality of the vessel, a backward filling method was used to calculate the change in latitude ($\Delta$LA) and longitude ($\Delta$LO) between consecutive points, ensuring that the data remained consistent without introducing gaps.

Moreover, all numeric features used in learning, including latitude (LA), longitude (LO), ground speed (SOG), course over ground (COG), change in latitude ($\Delta$LA), change in longitude ($\Delta$LO), sea level, and distance to the nearest tide gauge, were normalized using min-max scaling, which ensured that all feature values were within the range of 0 to 1, facilitating efficient and stable model learning. At this time, the scaler was applied only to the learning data to prevent data leakage.

Additionally, to focus on relevant test cases, trajectories within a 20 nautical mile radius of the nearest tide gauge were selected, and these trajectories were grouped into nine unique test cases at 100 cm intervals based on sea level changes from 0 to 900 cm. Next, the training and validation process followed the holdout validation strategy, for which the dataset was divided into 70% training, 15% validation, and 15% test. Specifically, trajectories with start dates between June 1, 2022, and September 30, 2022 were assigned to training (39,202 trajectories), trajectories between October 1, 2022, and October 31, 2022 were used for validation (9,013 trajectories), and trajectories between November 1, 2022, and November 30, 2022 were assigned to testing (8,641 trajectories).

In addition, the six deep learning models (RNN, LSTM, GRU, Bi-LSTM, Bi-GRU, Transformer) evaluated in the embodiments of the present invention were implemented using the PyTorch framework, and the Adam optimizer, which is widely known for its ability to handle sparse gradients and non-stationary objectives, was used for parameter updates during learning. That is, Adam estimates the first and second moments of the gradients to individually adjust the learning rate for each parameter, thereby improving optimization efficiency, especially in complex objective functions.

In addition, early stopping was used as a key mechanism to prevent overfitting, that is, learning was terminated if the validation loss did not improve for 10 consecutive epochs, so that learning was not continued when the model reached a performance plateau on unseen data. In addition, dropout was applied at a rate of 0.1 during learning to randomly disable neurons, thereby regularizing the model, preventing over-reliance on specific features, and promoting generalization.

Additionally, a learning rate scheduler (ReduceLROnPlateau) was applied to dynamically adjust the learning rate. If the validation loss plateaued for 5 epochs, the learning rate was reduced by a factor of 0.5. This method ensures efficient model convergence in the later stages of training, especially when fine-tuning the learning rate for smaller adjustments is required.

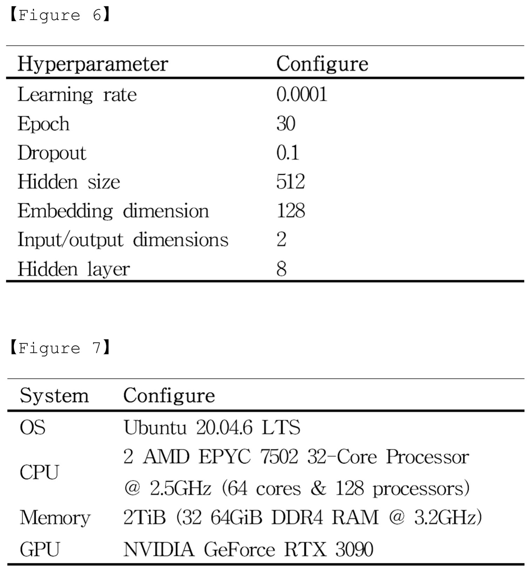

Furthermore, referring to Figures 6 and 7, Figure 6 is a table summarizing the hyperparameter settings applied to an embodiment of the present invention, and Figure 7 is a table summarizing the specific configuration of the test system applied to an embodiment of the present invention.

As shown in the table in Figure 6, the hyperparameters used in all models are summarized, and the experimental environment is described in the table in Figure 7. This configuration is consistently applied to all models, allowing for a fair comparison of performance across various architectures.

Continuing with the description of evaluation indices, the present invention evaluates the trajectory prediction performance of six prediction methods from global and local perspectives using the same six evaluation indices used in existing studies, and these indices (Mean Squared Error (MSE), Mean Absolute Error (MAE), Symmetric Mean Absolute Percentage Error (SMAPE), Final Displacement Error (FDE), Final Displacement (FD), and Average Euclidean Distance (AED)) provide a comprehensive evaluation framework that captures various dimensions of model accuracy and error distribution.

Here, more specific details regarding the evaluation indicators and evaluation methods utilizing them, as described above, are readily apparent to those skilled in the art by reference to prior art. Therefore, for the sake of brevity, the present invention omits detailed descriptions of matters that are readily apparent to those skilled in the art from the prior art, or that can be easily understood and implemented by those skilled in the art by reference to prior art literature.

Next, experimental results are described in which a ship's trajectory for the next 5 hours is predicted based on the previous 5 hours of data using various deep learning models in a multi-output prediction framework according to an embodiment of the present invention.

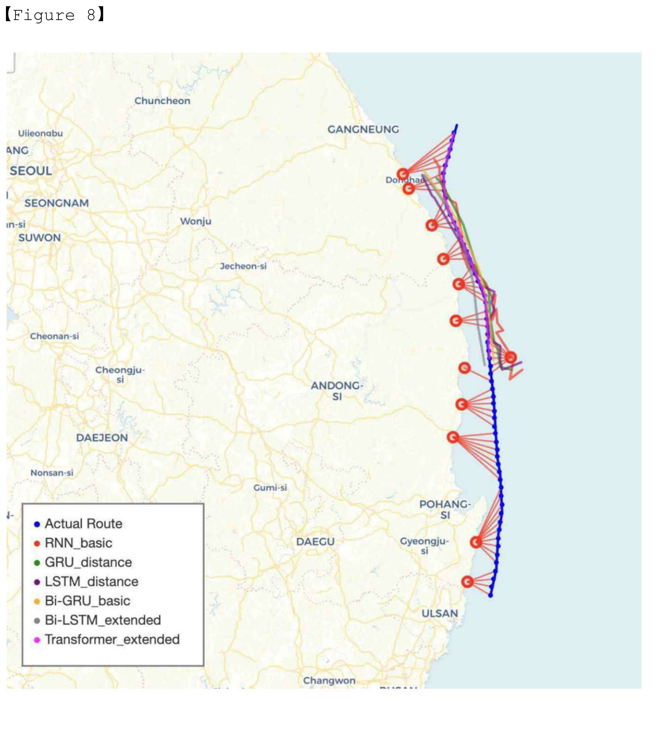

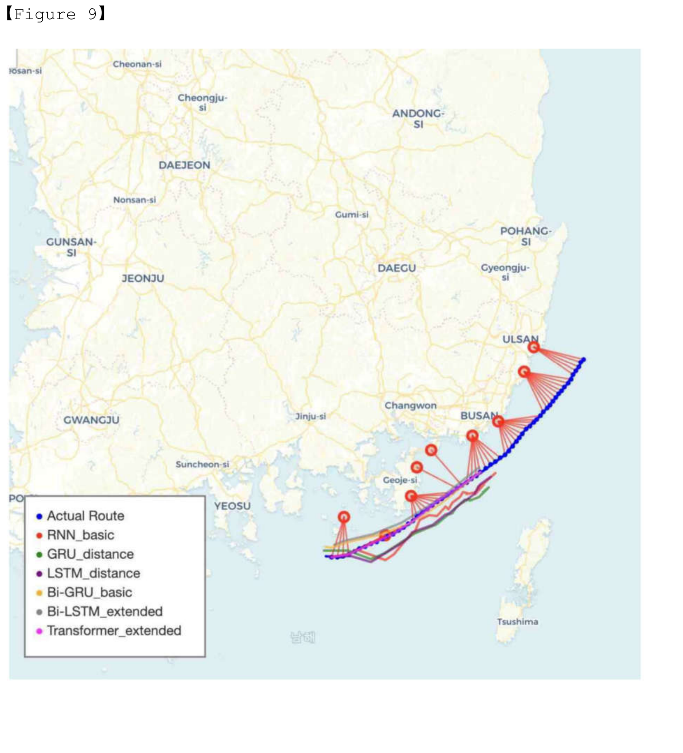

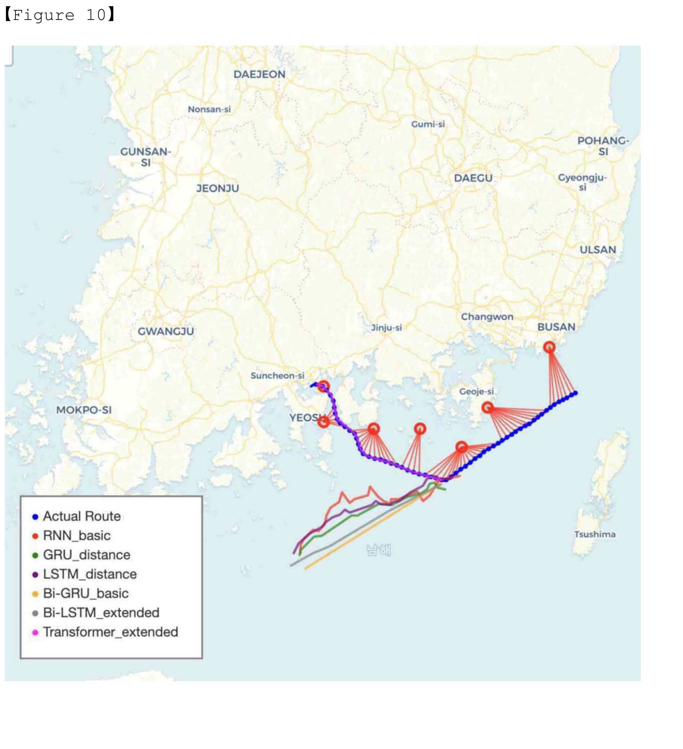

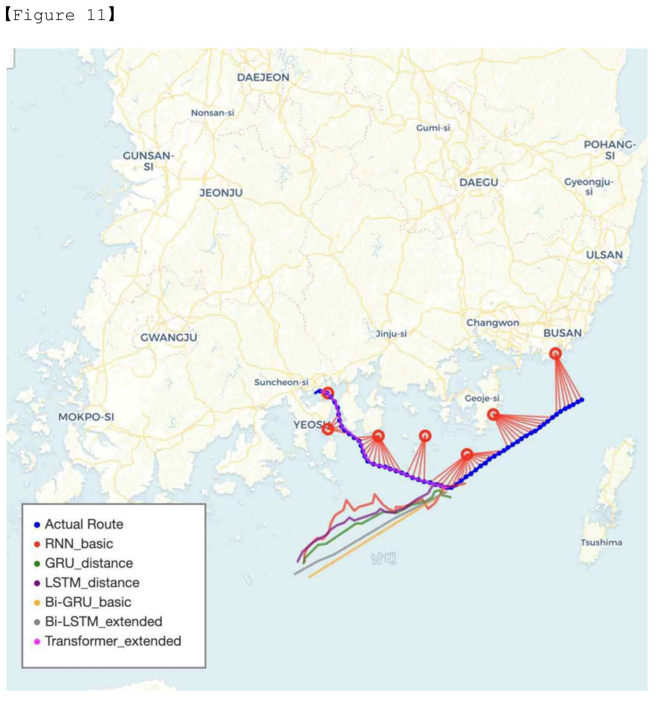

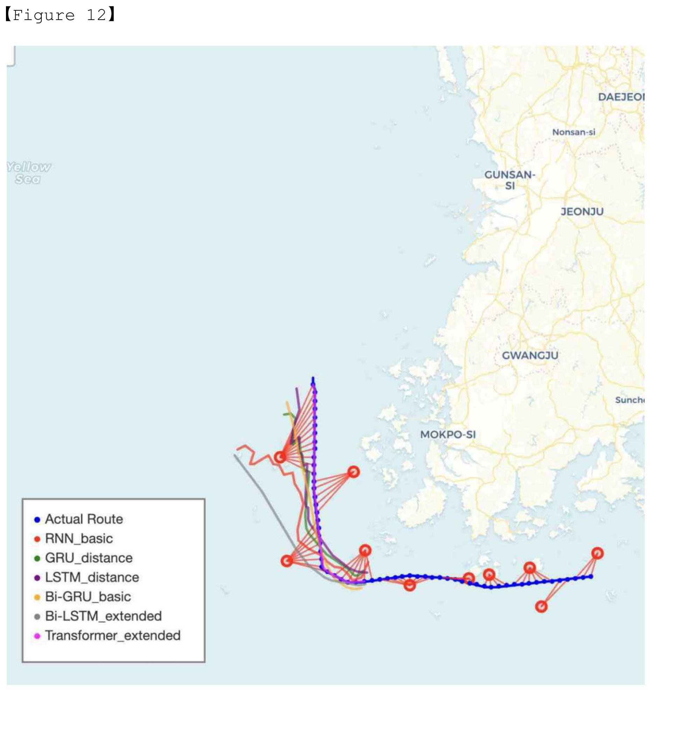

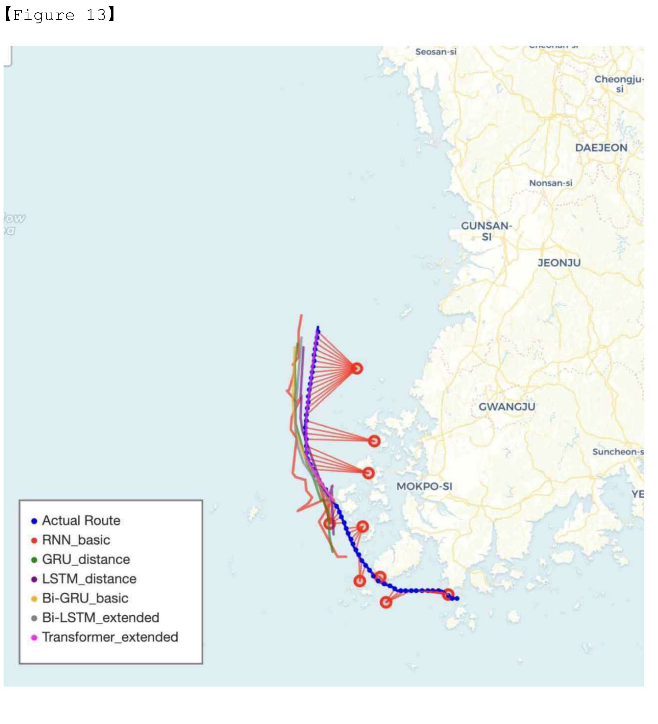

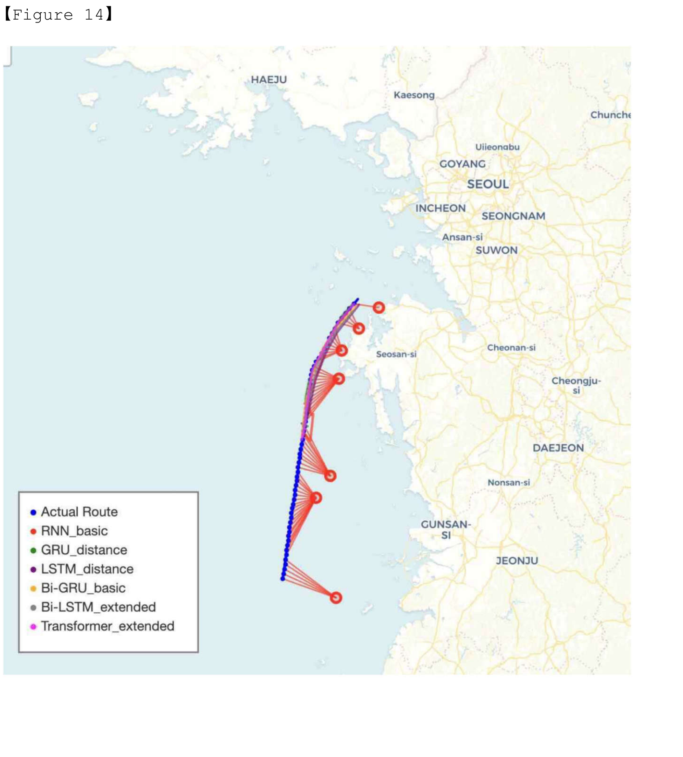

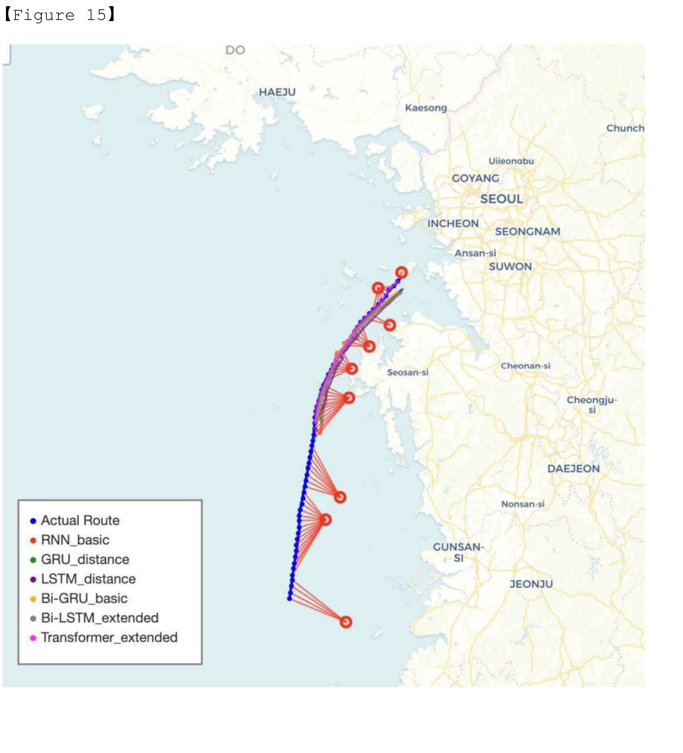

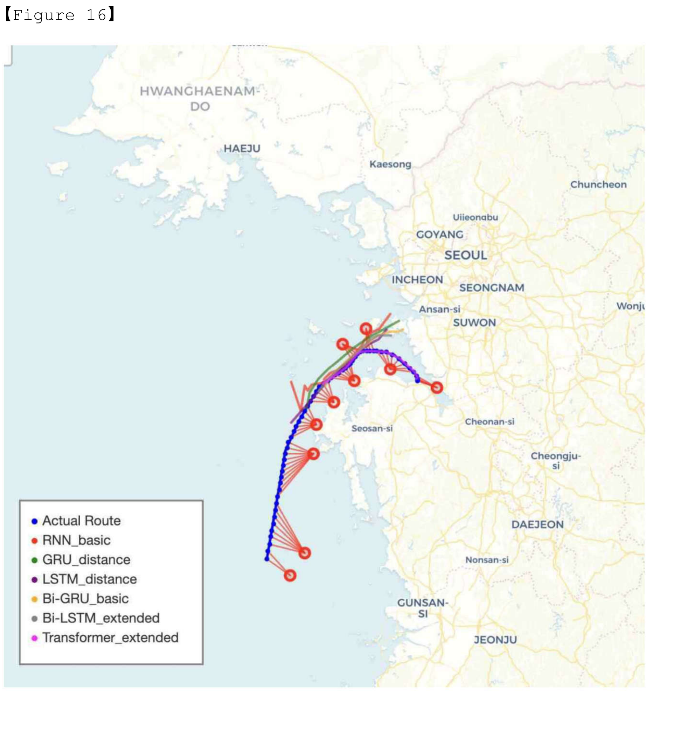

First, referring to FIGS. 8 to 16, FIGS. 8 to 14 are diagrams showing the trajectory prediction results for each model, where FIG. 8 shows the prediction results for the range of 0 to 100 cm, FIG. 9 shows the prediction results for the range of 100 to 200 cm, FIG. 10 shows the prediction results for the range of 200 to 300 cm, FIG. 11 shows the prediction results for the range of 300 to 400 cm, FIG. 12 shows the prediction results for the range of 400 to 500 cm, FIG. 13 shows the prediction results for the range of 500 to 600 cm, FIG. 14 shows the prediction results for the range of 600 to 700 cm, FIG. 15 shows the prediction results for the range of 700 to 800 cm, and FIG. 16 shows the prediction results for the range of 800 to 900 cm, respectively.

Here, the results shown in FIGS. 8 to 16 show the prediction results of each model along with the optimal feature configuration, that is, RNN and Bi-GRU used the basic feature set, LSTM and GRU used the distance feature set, and Bi-LSTM and Transformer used the extended feature set. In all test cases, the prediction results of the Transformer model were close to the actual path, showing excellent performance.

In particular, referring to Fig. 10, it can be seen that the prediction results of the Transformer model are almost indistinguishable from the actual path, while the other models show significant differences, which can be said to be an indication of the effectiveness of feature augmentation, especially the combination of sea level data and Haversine distance to tide gauge and the multi-output prediction framework, and the extended feature structure of Transformer was notably robust and excelled in complex environments such as the South Sea, which is characterized by strong tidal changes and complex coastlines.

These results highlight the importance of incorporating additional environmental features, such as sea level, into vessel trajectory prediction. The excellent performance of the Transformer model across multiple tidal regimes highlights the benefits of using augmented features, especially in marine environments with complex tidal dynamics.

Furthermore, a more detailed analysis of each model was performed, focusing on six key metrics, specifically the impact of feature augmentation and the model's response to varying sea level ranges. A clear trend of increasing prediction error was observed across all models as the range of sea level difference increased, indicating the strong impact of sea level change on vessel track prediction, particularly in regions with large tidal ranges.

More specifically, in the East Sea (0~100 cm), which has a relatively stable sea level and a straight coastline, the effect of feature augmentation is limited, resulting in relatively low error rates for each model. For example, the Transformer model showed only a marginal improvement with extended features in this region, whereas in the South Sea (100~500 cm), which is characterized by significant tidal variations and complex coastlines, the extended feature configuration of the Transformer model significantly outperformed the basic model, demonstrating the value of integrating sea level data and distance to tide gauges, which can help capture dynamic tidal variation and lead to better performance.

In addition, in the West Sea (500~900 cm) with extreme tidal changes, the Transformer model outperformed the Basic model, but the improvement rate was lower than that in the South Sea, and in the 800~900 cm range, the Extended model showed poor performance in some cases, especially the Transformer and Bi-GRU models. This can be attributed to the fact that the 10-hour prediction window extended beyond the area where sea level affects ship movement, reducing the effect of additional features. Therefore, from the results described above, it can be confirmed that sea level changes have a significant impact on ship trajectory prediction.

As described above, in the present invention, we conducted an experiment to demonstrate the importance of an indirect sea level referencing approach by utilizing the significant sea level differences observed along the East Sea, West Sea, and South Sea coasts of Korea. Considering the difficulty in obtaining real-time sea level data at the current location of a ship, we referred to the sea level data of the nearest tide gauge and, by augmenting the Haversine distance to the tide gauge as an additional feature, predicted the next 5 hours using the past 5 hours of trajectory data using a multi-output approach. As a result, most deep learning models consistently outperformed the baseline model, and improvements were confirmed in key indicators and test cases. In particular, it was confirmed that the Transformer model showed superior performance among various deep learning models.

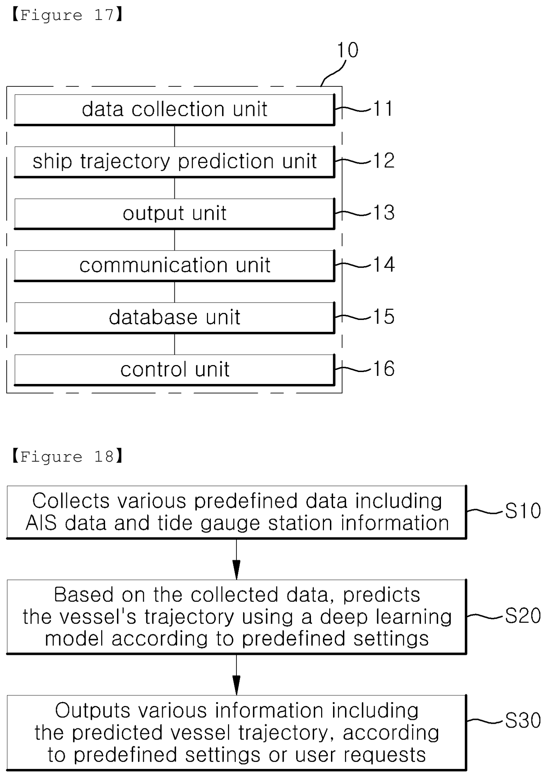

Accordingly, from the above-described contents, a trajectory prediction system and method using AIS data and tide observation station information according to an embodiment of the present invention can be easily implemented, that is, referring to FIG. 17, FIG. 17 is a block diagram schematically showing the overall configuration of a trajectory prediction system (10) using AIS data and tide observation station information according to an embodiment of the present invention.

As shown in FIG. 17, a trajectory prediction system (10) using AIS data and tide observation station information according to an embodiment of the present invention can be largely divided into a data collection unit (11) configured to perform processing for collecting various predetermined data for route prediction including AIS data and tide observation station information, a ship trajectory prediction unit (12) configured to perform processing for predicting a ship trajectory according to predetermined settings based on the data collected through the data collection unit (11), and an output unit (13) configured to perform processing for outputting various data obtained as a result of the processing of the data collection unit (11) and the ship trajectory prediction unit (12) according to predetermined settings.

Here, the above-mentioned trajectory prediction system (10) may be configured to further include a communication unit (14) for transmitting and receiving various data in at least one of wired or wireless communication, a database unit (15) for storing various data obtained as the overall processing process and processing results of the above-mentioned trajectory prediction system (10), and a control unit (16) for controlling the overall operation of each unit and the trajectory prediction system (10).

More specifically, the data collection unit (11) described above may be configured to receive various predetermined data from the AIS installed on the vessel and sea level data from the tide gauge of the nearest tide gauge station from the current location of the vessel, or to perform processing to directly input AIS data and sea level data through a separate input means.

That is, the data collection unit (11) described above may be configured to receive information on the latitude (LA), longitude (LO), speed over ground (SOG), and height over ground (COG) of the vessel from the AIS installed on the vessel, and to receive various data including the location (latitude and longitude) of the tide gauge station (tide gauge) from the nearest tide gauge station from the current location, the distance from the current location to the tide gauge station, and sea level information at the current point in time, or to perform processing to directly input each piece of information through a separate input means.

In addition, the above-described ship trajectory prediction unit (12) may be configured to perform a process of predicting a ship trajectory by considering environmental factors affecting the ship trajectory by reflecting sea level information and the Haversine distance to the nearest tide gauge at the vessel's current location, as described above with reference to [Equations 2] to [Equations 3], using a pre-trained deep learning model to predict a future trajectory from past trajectory data.

Here, it should be noted that more detailed information on the process of collecting AIS data and tide gauge information as described above and predicting a ship trajectory by considering environmental factors through a deep learning model can be appropriately implemented by those skilled in the art by referring to the contents described above with reference to FIGS. 1 to 16, and therefore, for the sake of brevity, a detailed description of overlapping content has been omitted.

Furthermore, it should be noted that the above-mentioned artificial intelligence (AI) model may be configured to perform processing for predicting a route from data received in real time through the data collection unit (11) using at least one of, for example, machine learning, artificial neural network (ANN), or convolutional neural network (CNN)-based artificial intelligence (AI) learning algorithms other than the above-mentioned deep learning model, and the present invention can be configured in various ways as needed.

In addition, the output unit (13) described above may be configured to output various data obtained from the overall processing process and processing results of each unit and the trajectory prediction system (10) described above in a specific format or form designated by a user, such as a table, graph, or specific file format, based on preset settings or user selection.

Furthermore, the communication unit (14) described above may be configured to transmit and receive various data by communicating with external devices, such as a server and a user terminal including, for example, a portable information and communication terminal such as a smartphone or tablet PC, or an information processing device such as a PC or laptop, in addition to various devices such as an AIS and a tide gauge, via at least one of wired or wireless communication.

Furthermore, the database unit (15) described above may be configured to store various data obtained as a result of the overall processing of each unit and the trajectory prediction system (10) described above, thereby constructing a database related to trajectory prediction for each vessel.

Furthermore, the control unit (16) described above may be configured to control the overall operation of each unit and the trajectory prediction system (10), while simultaneously providing customized information according to a user's request based on the data stored in the database unit (15).

Accordingly, as described above, a trajectory prediction system (10) utilizing AIS data and tide observation station information according to an embodiment of the present invention can be implemented, and by utilizing this, a trajectory prediction method utilizing AIS data and tide observation station information can be easily implemented.

That is, referring to FIG. 18, FIG. 18 is a flowchart schematically illustrating the overall configuration of a trajectory prediction method utilizing AIS data and tide observation station information according to an embodiment of the present invention.

As illustrated in FIG. 18, a trajectory prediction method using AIS data and tide gauge station information according to an embodiment of the present invention can be broadly divided into a data collection step (S10) in which various predetermined data for trajectory prediction including AIS data and tide gauge station information are collected, a ship trajectory prediction step (S20) in which a ship trajectory is predicted according to predetermined settings based on the data collected through the data collection step (S10), and an output step (S30) in which various data obtained as a result of the processing of the data collection step (S10) and the ship trajectory prediction step (S20) are output according to predetermined settings.

It should be noted that the processing of each step described above can also be appropriately implemented by those skilled in the art with reference to the contents described above with reference to FIGS. 1 to 16, and therefore, for the sake of brevity, a detailed description of overlapping content has been omitted.

In addition, in the above-described embodiment of the present invention, the sea level data of the tide gauge and the Haversine distance to the tide gauge were used in order to focus on the sea level as an environmental factor, but the present invention is not necessarily limited to the contents presented in the above-described embodiment, that is, the present invention may be configured to further increase the accuracy of ship trajectory prediction in more complex coastal conditions by including additional environmental variables such as wind and wave data in addition to the above-described tide gauge data, and it should be noted that the present invention may be configured by being modified and changed in various ways as needed by those skilled in the art without departing from the spirit and essence of the present invention.

In addition, in the embodiments of the present invention described above with reference to FIGS. 1 to 16, for example, more specific details such as a processing process for obtaining real-time sea level data and Haversine distance from a tide gauge or a processing process for predicting a ship's trajectory using a deep learning model are matters that can be appropriately implemented by those skilled in the art by referring to the contents of conventional route prediction systems and methods, etc. Therefore, in the present invention, in order to simplify the explanation, it should be noted that a detailed description has been omitted of details that are obvious to those skilled in the art from the contents of conventional technology as described above, or that can be easily understood and implemented by those skilled in the art by referring to documents of conventional technology, etc.

Therefore, as described above, a trajectory prediction system and method using AIS data and tide gauge information according to an embodiment of the present invention can be implemented. Accordingly, according to the present invention, predictions are made based on data that has been enhanced by integrating sea level information measured by the nearest tide gauge with AIS data. This enhances AIS prediction accuracy even in areas with significant tidal fluctuations. This solves the problem of prior art AIS prediction models, which have limited prediction accuracy in areas with significant tidal fluctuations due to failure to account for the impact of tidal fluctuations.

While the detailed contents of the trajectory prediction system and method using AIS data and tide gauge information according to the present invention have been described through the embodiments of the present invention as described above, the present invention is not limited to the details described in the embodiments described above. Therefore, it should be understood that various modifications, alterations, combinations, and substitutions are possible by those skilled in the art to which the present invention pertains, depending on design needs and various other factors.

[Description of Reference Numerals]

10. Trajectory prediction system using AIS data and tide gauge station information

11. data collection unit

12. ship trajectory prediction unit

13. output unit

14. communication unit

15. database unit

16. control unit

**Claims**

1.   A trajectory prediction system using Automatic Identification System (AIS) data and tide gauge station information comprises:

a data collection unit configured to collect various predetermined data for trajectory prediction, including AIS data and tide gauge station information;
a ship trajectory prediction unit configured to predict a ship's trajectory based on the data collected through the data collection unit according to predetermined settings; and
an output unit configured to output various data obtained as a result of the processing of the data collection unit and the vessel trajectory prediction unit according to predetermined settings.

2. The trajectory prediction system according to claim 1, further comprises:

   a communication unit configured to transmit and receive various data through at least one of wired and wireless communication between various equipment, including AIS and tide gauges installed on a vessel, and user terminals including personal portable information and communication terminals such as smartphones or tablet PCs, or information processing devices such as PCs or laptops, and external devices including servers;
   a database unit configured to store the overall processing process of the trajectory prediction system and various data obtained as a result of the processing, thereby establishing a trajectory prediction-related database for each vessel; and
   a control unit configured to control the overall operation of the trajectory prediction system.

3. The trajectory prediction system according to claim 1, wherein the data collection unit is configured to:
   receive various data including the latitude, longitude, speed over ground (SOG), and course over ground (COG) of the vessel, the latitude and longitude of the nearest tide gauge station(tide gauge) from the current position, the distance from the current position to the tide gauge station, and sea level information at the current point in time from the AIS installed on the vessel and tide gauge station, or perform processing to directly receive each of said information through a separate input means.

4. The trajectory prediction system according to claim 1, wherein the vessel trajectory prediction unit is configured to:

   using a deep learning model pre-trained to predict future trajectories from past trajectory data, by reflecting sea level information and the Haversine distance (d) to the nearest tide gauge to the vessel's current position predict the vessel trajectory using the following mathematical equation,

$$d = 2R \cdot \arcsin(\sqrt{a})$$

$$\sin^2(\frac{\triangle\phi}{2}) + \cos(\phi_1) \cdot \cos(\phi_2) \cdot \sin^2(\frac{\triangle\lambda}{2})$$

   (Here, R represents the Earth's radius (R = 6371 km), $\varphi1$ and $\varphi2$ represent the latitudes of the vessel and the tide gauge, respectively, and $\triangle\varphi$ and $\triangle\lambda$ represent the latitude and longitude differences between the vessel and the tide gauge, respectively.)

5. The trajectory prediction system according to claim 1, wherein the output unit is configured to:
   output the overall processing process of the trajectory prediction system and various data obtained as a result of the processing in a specific form or format according to predetermined settings or user selection.

6. The trajectory prediction system according to claim 2, wherein the control unit is configured to:
   control the overall operation of the trajectory prediction system and, based on data stored in the database, to provide customized information according to a user's request.

7. A trajectory prediction method using the trajectory prediction system using AIS data and tide gauge station information as described in claim 1, comprising:

   a data collection step in which various predetermined data for trajectory prediction, including AIS data and tide gauge station information, are collected through the data collection unit of the trajectory prediction system;
   a vessel trajectory prediction step in which a vessel trajectory is predicted according to predetermined settings based on the data collected through the data collection step, through the vessel trajectory prediction unit of the trajectory prediction system; and
   an output step in which various data obtained as a result of the data collection step and the vessel trajectory prediction step are output according to predetermined settings through the output unit of the trajectory prediction system.

【Figure 1】

| SOG | Speed over ground (kn) |
|---|---|
| COG | Course over ground (°) |
| LA | Latitude (°) |
| △LA | Latitude difference between current point and previous point (°) |
| LO | Longitude (°) |
| △LO | Longitude difference between current point and previous point (°) |
| Distance | Haversine distance between the vessel's position and nearest tidal gauge |
| Tide | Tide from nearest tidal gauge |

【Figure 2】

【Figure 3】

Sea Level Difference for Each Gauge

【Figure 4】

【Figure 5】

| Data | | |
|---|---|---|
| AIS | Sea Level | Distance to Gauge |

⇩

| Features | | | |
|---|---|---|---|
| Basic | Distance | Sea Level | Extended |

⇩

| Models | | | | | |
|---|---|---|---|---|---|
| RNN | LSTM | GRU | Bi-LSTM | Bi-GRU | Transformer |

⇩

| Criteria | | | | | |
|---|---|---|---|---|---|
| RMSE | MAE | SMAPE | FDE | FD | AED |

⇩

| Forecast | | |
|---|---|---|
| Multi-output forecast Past 5H → Future 5H | Sequences under 20 nautical miles | 9 test cases divided by tidal variations in 100cm increments |

| Model | Feature |
|---|---|
| Basic | LA, LO, SOG, COG, ΔLA, ΔLO |
| Distance | Basic features, Distance |
| Sea Level | Basic features, Sea Level |
| Extended | Basic features, Sea Level, Distance |

【Figure 6】

| Hyperparameter | Configure |
| --- | --- |
| Learning rate | 0.0001 |
| Epoch | 30 |
| Dropout | 0.1 |
| Hidden size | 512 |
| Embedding dimension | 128 |
| Input/output dimensions | 2 |
| Hidden layer | 8 |

【Figure 7】

| System | Configure |
| --- | --- |
| OS | Ubuntu 20.04.6 LTS |
| CPU | 2 AMD EPYC 7502 32-Core Processor @ 2.5GHz (64 cores & 128 processors) |
| Memory | 2TiB (32 64GiB DDR4 RAM @ 3.2GHz) |
| GPU | NVIDIA GeForce RTX 3090 |

【Figure 8】

【Figure 9】

【Figure 10】

【Figure 11】

【Figure 12】

【Figure 13】

【Figure 14】

【Figure 15】

【Figure 16】

【Figure 17】

10

| data collection unit | 11 |
| ship trajectory prediction unit | 12 |
| output unit | 13 |
| communication unit | 14 |
| database unit | 15 |
| control unit | 16 |

【Figure 18】

| Collects various predefined data including AIS data and tide gauge station information | S10 |
| Based on the collected data, predicts the vessel's trajectory using a deep learning model according to predefined settings | S20 |
| Outputs various information including the predicted vessel trajectory, according to predefined settings or user requests | S30 |

Europäisches
Patentamt
European
Patent Office
Office européen
des brevets

# EUROPEAN SEARCH REPORT

**Application Number**

EP 25 21 6145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/081665 A1 (IZUMIKAWA MASAYA [JP] ET AL) 16 March 2023 (2023-03-16) | 1-3,5-7 | INV. G01C21/20 |
| A | * paragraphs [0006], [0019], [0020], [0032] - [0041], [0054], [0065] - [0074]; figures 1,4,5 * | 4 | G08G3/00 |
| | ----- | | |
| X | KR 2024 0026578 A (KEPCO KDN CO LTD [KR]) 29 February 2024 (2024-02-29) * paragraphs [0042] - [0058]; figure 1 * | 1-3,5-7 | |
| | ----- | | |
| X | CN 107 945 578 A (UNIV DALIAN MARITIME) 20 April 2018 (2018-04-20) | 1-3,5-7 | |
| A | * claim 2; figure 1 * | 4 | |
| | ----- | | |
| A | KR 102 539 035 B1 (NAT UNIV KUNSAN IACF [KR]) 31 May 2023 (2023-05-31) * paragraphs [0017], [0018], [0051], [0054] * | 1-7 | |
| | ----- | | |

**TECHNICAL FIELDS SEARCHED (IPC)**

G01C
G08G
G06N

The present search report has been drawn up for all claims

| Place of search | Date of completion of the search | Examiner |
|---|---|---|
| The Hague | 17 March 2026 | Bruinsma, Maarten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 6145

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | Publication date | Patent family member(s) | | Publication date |
|---|---|---|---|---|
| US 2023081665 A1 | 16-03-2023 | CN | 115794959 A | 14-03-2023 |
| | | EP | 4148387 A1 | 15-03-2023 |
| | | JP | 2023041010 A | 23-03-2023 |
| | | US | 2023081665 A1 | 16-03-2023 |
| KR 20240026578 A | 29-02-2024 | NONE | | |
| CN 107945578 A | 20-04-2018 | NONE | | |
| KR 102539035 B1 | 31-05-2023 | NONE | | |

EPO FORM P0459

For more details about this annex : see Official Journal of the European Patent Office, No. 12/82

**EP 4 749 244 A1**

**Patent documents cited in the description**

- KR 1020240170027
- KR 1020240126909
- KR 1020230137720